# EUROPEAN PATENT APPLICATION

(11) **EP 4 660 244 A1**
(43) Date of publication of application: **10.12.2025**
(21) Application number: 24750449.1
(22) Date of filing: 11.01.2024
(51) Int. Cl.: C08L 67/02, C08L 55/02, C08L 25/12, C08L 35/06, C08L 25/14, C08L 51/04

(54) **THERMOPLASTIC RESIN COMPOSITION AND MOLDED ARTICLE USING SAME**

(30) Priority: 31.01.2023 KR 20230013206
(71) Applicant: LOTTE CHEMICAL CORPORATION, Seoul 05551 (KR)
(72) Inventor: LEE, Yujin, Uiwang-si, Gyeonggi-do 16073 (KR); YIM, Jeaseok, Uiwang-si, Gyeonggi-do 16073 (KR); CHU, Donghui, Uiwang-si, Gyeonggi-do 16073 (KR)
(74) Representative: Germain Maureau
(86) International application number: PCT/KR2024/000513
(87) International publication number: WO 2024/162647

(57) **Abstract**

A thermoplastic resin composition and a molded article using the same are disclosed. **In** an embodiment, provided is a thermoplastic resin composition including, based on (A) 100 parts by weight of a base resin, 0.5 to 5 parts by weight of a butadiene-based rubber-modified graft copolymer (B), the base resin (A) including: 20 to 25 wt% of (A-1) a butadiene-based rubber-modified aromatic vinyl compound-vinyl cyanide compound graft copolymer; (A-2) 20 to 40 wt% of a polyethylene terephthalate resin; (A-3) 20 to 25 wt% of an aromatic vinyl compound-vinyl cyanide compound copolymer; (A-4) 5 to 15 wt% of an epoxy group-containing (meth)acrylate compound-aromatic vinyl compound-vinyl cyanide compound copolymer; and (A-5) 10 to 20 wt% of a phenyl maleimide-based copolymer.

## Description

### [Technical Field]

A thermoplastic resin composition and a molded article using the same are disclosed.

### [Background Art]

An acrylonitrile-butadiene-styrene copolymer (ABS) resin, which is mainly used in automobile interior materials, is a thermoplastic resin with a low specific gravity and excellent formability and chemical resistance compared to glass or metal.

Recently, as the demand for eco-friendly materials increases, molded articles are also manufactured by mixing an ABS resin and a polyethylene terephthalate (PET) resin. In this case, excellent chemical resistance may be achieved while reducing odor.

However, the ABS resin and PET resin do not have good compatibility with each other, and thus it is difficult for molded articles manufactured from their mixture to achieve target properties such as heat resistance and impact resistance.

Moreover, heat resistance and impact resistance are properties that have a trade-off relationship with each other, and it is difficult to harmoniously increase the two properties simply by mixing the ABS resin and PET resin.

### [Disclosure]

### [Description of the Drawings]

### [Technical Problem]

The present invention is to provide a thermoplastic resin composition having excellent fluidity, heat resistance, and impact resistance while exhibiting low odor characteristics and chemical resistance.

### [Technical Solution]

In an embodiment, provided is a thermoplastic resin composition including, based on (A) 100 parts by weight of a base resin including (A-1) 20 to 25 wt% of a butadiene-based rubber-modified aromatic vinyl compound-vinyl cyanide compound graft copolymer; (A-2) 20 to 40 wt% of a polyethylene terephthalate resin; (A-3) 20 to 25 wt% of an aromatic vinyl compound-vinyl cyanide compound copolymer; (A-4) 5 to 15 wt% of an epoxy group-containing (meth)acrylate compound-aromatic vinyl compound-vinyl cyanide compound copolymer; and (A-5) 10 to 20 wt% of a phenyl maleimide-based copolymer, (B) 0.5 to 5 parts by weight of a butadiene-based rubber modified graft copolymer.

The butadiene-based rubber modified aromatic vinyl compound-vinyl cyanide compound graft copolymer (A-1) may include a core-shell structured particle including a core made of a butadiene-based rubbery polymer; and a shell formed by graft polymerization of an aromatic vinyl compound-vinyl cyanide compound copolymer onto the core.

The butadiene-based rubber modified aromatic vinyl compound-vinyl cyanide compound graft copolymer (A-1) may be an acrylonitrile-butadiene-styrene graft copolymer.

The polyethylene terephthalate resin (A-2) may be a recycled polyethylene terephthalate resin.

The aromatic vinyl compound-vinyl cyanide compound copolymer (A-3) may be a styrene-acrylonitrile copolymer.

The epoxy group-containing (meth)acrylate compound-aromatic vinyl compound-vinyl cyanide compound copolymer (A-4) may be a glycidyl methacrylate-styrene-acrylonitrile copolymer.

The phenyl maleimide-based copolymer (A-5) may be an N-phenyl maleimide-styrene-maleic anhydride copolymer.

The butadiene-based rubber modified graft copolymer (B) may be a core-shell structured particle including a core made of a butadiene-based rubbery polymer; and a shell formed by graft polymerization of an aromatic vinyl compound-vinyl cyanide compound copolymer onto the core.

The butadiene-based rubber modified graft copolymer (B) may be a methylmethacrylate-butadiene-styrene copolymer.

Another embodiment provides a molded article using the thermoplastic resin composition.

The molded article may have a notched Izod impact strength of greater than or equal to 12 kgf·cm/cm as measured on a 1/8 inch-thick specimen according to ASTM D256.

The molded article may have a melt flow index of greater than or equal to 9 g/10 min as measured under the conditions of 250°C and 10 kg according to ISO 1133.

The molded article may have a heat distortion temperature of greater than or equal to 106°C when measured under a load of 4.6 kgf/cm² on a 6.4 mm-thick specimen according to ASTM D648.

### [Advantageous Effects]

The thermoplastic resin composition of an embodiment can exhibit excellent fluidity, impact resistance, and heat resistance while exhibiting low odor characteristics and chemical resistance. Accordingly, a molded article using the thermoplastic resin composition of an embodiment is particularly suitable for implementation as an interior material for an automobile.

### [Best Mode]

Hereinafter, embodiments of the present invention are described in detail. However, these embodiments are exemplary, and this disclosure is not limited thereto.

### (Definition of Terms)

In the present specification, the 'average particle diameter' of the rubbery polymer means the volume average particle diameter, and refers to the Z-average particle diameter measured using a dynamic light scattering analysis equipment.

In this specification, the 'weight average molecular weight' may be measured by dissolving a powder sample in an appropriate solvent and using Agilent Technologies' 1200 series gel permeation chromatography (GPC) (Shodex polystyrene is used as the standard sample).

### (Thermoplastic Resin Composition)

In an embodiment, provided is a thermoplastic resin composition including, based on (A) 100 parts by weight of a base resin including (A-1) 20 to 25 wt% of a butadiene-based rubber-modified aromatic vinyl compound-vinyl cyanide compound graft copolymer; (A-2) 20 to 40 wt% of a polyethylene terephthalate resin; (A-3) 20 to 25 wt% of an aromatic vinyl compound-vinyl cyanide compound copolymer; (A-4) 5 to 15 wt% of an epoxy group-containing (meth)acrylate compound-aromatic vinyl compound-vinyl cyanide compound copolymer; and (A-5) 10 to 20 wt% of a phenyl maleimide-based copolymer, (B) 0.5 to 5 parts by weight of a butadiene-based rubber modified graft copolymer.

In the thermoplastic resin composition of an embodiment, the base resin (A) including the butadiene-based rubber-modified aromatic vinyl compound-vinyl cyanide compound graft copolymer (A-1); and the polyethylene terephthalate resin (A-2); the aromatic vinyl compound-vinyl cyanide compound copolymer (A-3); the epoxy group-containing (meth)acrylate compound-aromatic vinyl compound-vinyl cyanide compound copolymer (A-4); and the phenyl maleimide-based copolymer (A-5) may improve heat resistance, low odor characteristics, and chemical resistance compared to a two-type mixture of the butadiene-based rubber-modified aromatic vinyl compound-vinyl cyanide compound graft copolymer (A-1); and the polyethylene terephthalate resin (A-2); but impact resistance may be somewhat reduced due to the presence of the phenyl maleimide-based copolymer (A-5). Here, when (B) a butadiene-based rubber-modified graft copolymer is added, impact resistance may be improved without significantly reducing heat resistance.

**In** this regard, the thermoplastic resin composition of an embodiment is formulated to have a composition that can exhibit excellent fluidity, impact resistance, and heat resistance while exhibiting low odor characteristics and chemical resistance. Accordingly, the thermoplastic resin composition of an embodiment and the molded article using the same are particularly suitable for implementation as an interior material for automobiles.

Hereinafter, the thermoplastic resin composition will be described in more detail.

### [(A) Base Resin]

The thermoplastic resin composition of an embodiment includes (A-1) a butadiene-based rubber-modified aromatic vinyl compound-vinyl cyanide compound graft copolymer represented by an acrylonitrile-butadiene-styrene copolymer (ABS) resin; and (A-2) a polyethylene terephthalate (PET) resin.

As described above, the mixture of the ABS resin and **PET** resin can exhibit low odor characteristics and chemical resistance, but it is difficult to achieve target properties such as heat resistance and impact resistance due to poor compatibility of the two resins.

In this regard, the thermoplastic resin composition of an embodiment uses the base resin (A) to which the aromatic vinyl compound-vinyl cyanide compound copolymer (A-3); the epoxy group-containing (meth)acrylate compound-aromatic vinyl compound-vinyl cyanide compound copolymer (A-4); and the phenyl maleimide-based copolymer (A-5) are added in order to improve the compatibility thereof while also improving heat resistance and impact resistance, to the butadiene-based rubber-modified aromatic vinyl compound-vinyl cyanide compound graft copolymer (A-1); and the polyethylene terephthalate resin (A-2).

Specifically, the base resin (A) may include 20 to 25 wt% of the butadiene-based rubber-modified aromatic vinyl compound-vinyl cyanide compound graft copolymer (A-1); 20 to 40 wt% of the polyethylene terephthalate resin (A-2); 20 to 25 wt% of the aromatic vinyl compound-vinyl cyanide compound copolymer (A-3); 5 to 15 wt% of the epoxy group-containing (meth)acrylate compound-aromatic vinyl compound-vinyl cyanide compound copolymer (A-4); and 10 to 20 wt% of the phenyl maleimide-based copolymer (A-5).

The base resin (A) formulated as described above can excellently exhibit impact resistance by the butadiene-based rubber-modified aromatic vinyl compound-vinyl cyanide compound graft copolymer (A-1); low odor characteristics by the polyethylene terephthalate resin (A-2); chemical resistance and fluidity by the aromatic vinyl compound-vinyl cyanide compound copolymer (A-3); compatibility by the epoxy group-containing (meth)acrylate compound-aromatic vinyl compound-vinyl cyanide compound copolymer (A-4); and heat resistance by the phenyl maleimide-based copolymer (A-5).

### (A-1) Butadiene-based Rubber-modified Aromatic Vinyl Compound-Vinyl Cyanide Compound Graft Copolymer

In the thermoplastic resin composition of an embodiment, the butadiene-based rubber-modified aromatic vinyl compound-vinyl cyanide compound graft copolymer (A-1) may be a core-shell structured particle, including a core made of a butadiene-based rubbery polymer; and a shell formed by graft polymerization of the aromatic vinyl compound-vinyl cyanide compound copolymer onto the core.

The butadiene-based rubber-modified aromatic vinyl compound-vinyl cyanide compound graft copolymer (A-1) having the core-shell structure may be produced by graft polymerizing a monomer mixture including an aromatic vinyl compound and a vinyl cyanide compound onto a butadiene-based rubbery polymer. The polymerization method may utilize a conventional manufacturing method, such as emulsion polymerization, suspension polymerization, solution polymerization, and bulk polymerization.

The butadiene-based rubbery polymer constituting the core of the butadiene-based rubber-modified aromatic vinyl compound-vinyl cyanide compound graft copolymer (A-1) may have an average particle diameter of 100 to 400 nm, specifically, 100 to 300 nm. When the above range is satisfied, a thermoplastic resin composition including the same can exhibit excellent gloss and impact resistance.

Meanwhile, the aromatic vinyl compound forming the shell of the butadiene-based rubber-modified aromatic vinyl compound-vinyl cyanide compound graft copolymer (A-1) may be styrene, α-methylstyrene, p-methylstyrene, p-t-butylstyrene, 2,4-dimethylstyrene, chlorostyrene, vinyltoluene, vinyl naphthalene, or a combination thereof, and may be, for example, styrene. In addition, the vinyl cyanide compound forming the shell of the butadiene-based rubber-modified aromatic vinyl compound-vinyl cyanide compound graft copolymer (A-1) may be acrylonitrile, methacrylonitrile, or a combination thereof, and may be, for example, acrylonitrile.

The shell of the butadiene-based rubber modified aromatic vinyl compound-vinyl cyanide compound graft copolymer (A-1) may be formed by graft polymerization of a monomer mixture of 70 to 80 wt% of the aromatic vinyl compound and 20 to 30 wt% of the vinyl cyanide compound onto the core.

Based on the solid content of the butadiene-based rubber modified aromatic vinyl compound-vinyl cyanide compound graft copolymer (A-1), an amount of the core made of the butadiene-based rubbery polymer may be 40 to 60 wt%.

For example, the butadiene-based rubber modified aromatic vinyl compound-vinyl cyanide compound graft copolymer (A-1) may be an acrylonitrile-butadiene-styrene graft copolymer (g-ABS). The g-ABS may be produced by graft copolymerizing acrylonitrile and styrene onto butadiene rubber using a conventional polymerization method.

The butadiene-based rubber modified aromatic vinyl compound-vinyl cyanide compound graft copolymer (A-1) may be used in an amount of greater than or equal to 20 wt%, or greater than or equal to 21 wt%, and less than or equal to 25 wt%, less than or equal to 24 wt%, or less than or equal to 23 wt%, based on 100 wt% of the base resin (A).

### (A-2) Polyethylene Terephthalate Resin

In the thermoplastic resin composition of an embodiment, (A-2) polyethylene terephthalate resin may play a role in improving chemical resistance.

The polyethylene terephthalate resin (A-2) may be a resin obtained by a polycondensation reaction from terephthalic acid or a derivative thereof and ethylene glycol or a derivative thereof, and may include polyethylene terephthalate (PET), glycol-modified polyethylene terephthalate (PETG), polytetramethylene glycol (PTMG), polypropylene glycol (PPG), an aliphatic polyester, a copolymer of an aliphatic polyamide and polyethylene terephthalate (PET), and a combination thereof.

For example, the polyethylene terephthalate resin (A-2) may be a recycled polyethylene terephthalate resin regenerated from waste polyethylene terephthalate. Here, the recycled polyethylene terephthalate resin may refer to a polyethylene terephthalate resin physically or chemically recycled from waste PET bottles, etc.

In addition, the polyethylene terephthalate resin (A-2) may have an intrinsic viscosity of 0.7 to 1.5 dl/g as measured according to ASTM D4603 to sufficiently secure impact resistance.

The polyethylene terephthalate resin (A-2) may be used in an amount of greater than or equal to 20 wt%, greater than or equal to 23 wt%, greater than or equal to 25 wt%, or greater than or equal to 27 wt%, and less than or equal to 40 wt%, less than or equal to 37 wt%, less than or equal to 35 wt%, or less than or equal to 33 wt%, based on 100 wt% of the base resin (A).

### (A-3) Aromatic Vinyl Compound-Vinyl Cyanide Compound Copolymer

In the thermoplastic resin composition of an embodiment, the aromatic vinyl compound-vinyl cyanide compound copolymer (A-3) may be produced by copolymerizing a monomer mixture including an aromatic vinyl compound and a vinyl cyanide compound. The copolymerization method can utilize a conventional manufacturing method, such as emulsion polymerization, suspension polymerization, solution polymerization, and bulk polymerization.

The aromatic vinyl compound forming the aromatic vinyl compound-vinyl cyanide compound copolymer (A-3) may be styrene, α-methylstyrene, p-methylstyrene, p-t-butylstyrene, 2,4-dimethylstyrene, chlorostyrene, vinyltoluene, vinyl naphthalene, or a combination thereof, and may be, for example, styrene. Additionally, the vinyl cyanide compound forming the aromatic vinyl-vinyl cyanide compound copolymer (A-3) may be acrylonitrile, methacrylonitrile, fumaronitrile or a combination thereof, and may be, for example, acrylonitrile.

For example, the aromatic vinyl compound-vinyl cyanide copolymer (A-3) may be a styrene-acrylonitrile copolymer (SAN).

Additionally, the weight average molecular weight of the aromatic vinyl compound-vinyl cyanide compound copolymer (A-3) may be 100,000 to 200,000 g/mol. When the above range is satisfied, a thermoplastic resin composition including the same can exhibit excellent impact resistance and fluidity.

The aromatic vinyl compound-vinyl cyanide compound copolymer (A-3) may be used in an amount of greater than or equal to 20 wt%, greater than or equal to 21 wt%, or greater than or equal to 22 wt%, and less than or equal to 25 wt%, or less than or equal to 24 wt%, based on 100 wt% of the base resin (A).

### (A-4) Epoxy Group-containing (Meth)acrylate-Aromatic Vinyl Compound-Vinyl Cyanide Compound Copolymer

The epoxy group-containing (meth)acrylate-aromatic vinyl compound-vinyl cyanide compound copolymer (A-4) may improve miscibility between the components of a thermoplastic resin composition, thereby maximizing the effect of improving the physical properties of each component included in the thermoplastic resin composition.

The epoxy group-containing (meth)acrylate-aromatic vinyl compound-vinyl cyanide compound copolymer (A-4) may be produced by copolymerizing an epoxy group-containing (meth)acrylate, an aromatic vinyl compound, and a vinyl cyanide compound. The copolymerization may be performed by a known polymerization method such as emulsion polymerization, suspension polymerization, or bulk polymerization.

The epoxy group-containing (meth)acrylate constituting the epoxy group-containing (meth)acrylate-aromatic vinyl compound-vinyl cyanide compound copolymer (A-4) may be an epoxy group-containing (meth)acrylate such as glycidyl methacrylate or glycidyl acrylate. These may be applied alone or in combination of two or more.

The aromatic vinyl compound constituting the epoxy group-containing (meth)acrylate-aromatic vinyl compound-vinyl cyanide compound copolymer (A-4) may be styrene, α-methylstyrene, p-methylstyrene, p-t-butylstyrene, 2,4-dimethylstyrene, chlorostyrene, vinyltoluene, vinylnaphthalene, or a combination thereof, and may be, for example, styrene.

In addition, the vinyl cyanide compound constituting the epoxy group-containing (meth)acrylate-aromatic vinyl compound-vinyl cyanide compound copolymer (A-4) may be acrylonitrile, methacrylonitrile, or a combination thereof, and may be, for example, acrylonitrile.

For example, the epoxy group-containing (meth)acrylate-aromatic vinyl compound-vinyl cyanide compound copolymer (A-4) may be a glycidyl methacrylate-styrene-acrylonitrile copolymer (GMA-SAN or SAG).

A weight average molecular weight of the epoxy group-containing (meth)acrylate-aromatic vinyl compound-vinyl cyanide compound copolymer (A-4) may be 100,000 to 200,000 g/mol. When the above range is satisfied, a thermoplastic resin composition including the same can exhibit excellent compatibility.

The epoxy group-containing (meth)acrylate-aromatic vinyl compound-vinyl cyanide compound copolymer (A-4) may be used in an amount of greater than or equal to 5 wt%, or greater than or equal to 7 wt%, and less than or equal to 15 wt%, or less than or equal to 13 wt%, based on 100 wt% of the base resin (A).

### (A-5) Phenyl Maleimide-based Copolymer

In the thermoplastic resin composition of an embodiment, the phenyl maleimide-based copolymer (A-5) is a type of heat booster and can improve the heat resistance of the thermoplastic resin composition.

The phenyl maleimide-based copolymer (A-5) may be an N-phenyl maleimide-styrene-maleic anhydride copolymer (PMI-SM-MAH), which may be produced through an imidization reaction of a styrene-maleic anhydride copolymer.

Specifically, the phenyl maleimide-based copolymer (A-5) may include 20 to 55 wt% of an N-phenyl maleimide-derived component, 40 to 75 wt% of a styrene-derived component, and 1 to 7 wt% of a maleic anhydride-derived component.

A glass transition temperature (Tg) of the phenyl maleimide-based copolymer (A-5) may be 170 to 220°C, 180 to 210°C, or 190 to 200°C.

In addition, a weight average molecular weight of the phenyl maleimide-based copolymer (A-5) may be 100,000 to 200,000 g/mol. When the above range is satisfied, a thermoplastic resin composition including the same can exhibit excellent heat resistance.

The phenyl maleimide-based copolymer (A-5) may be used in an amount of greater than or equal to 10 wt%, or greater than or equal to 13 wt%, and less than or equal to 20 wt%, or less than or equal to 17 wt%, based on 100 wt% of the base resin (A).

### [(B) Butadiene-based Rubber-modified Graft Copolymer]

In the thermoplastic resin composition of an embodiment, the butadiene-based rubber-modified graft copolymer (B) is a type of impact modifier and can play a role in enhancing the impact resistance of the thermoplastic resin composition.

In an embodiment, the composition may include 0.5 to 5 parts by weight of the butadiene-based rubber-modified graft copolymer (B) based on 100 parts by weight of the base resin (A). Within the above range, the thermoplastic resin composition of an embodiment can have improved impact resistance. However, if the amount of the (B) butadiene-based rubber-modified graft copolymer exceeds 5 parts by weight, the viscosity of the thermoplastic resin composition may increase, thereby reducing the formability, and if it is less than 0.5 parts by weight, the effect of improving impact resistance may be minimal.

The butadiene-based rubber modified graft copolymer (B) may be a core-shell structured particle, including a core made of a butadiene-based rubbery polymer; and a shell formed by graft polymerization of an aromatic vinyl compound-vinyl cyanide compound copolymer onto the core.

The butadiene-based rubber modified graft copolymer (B) may be produced by graft polymerizing a monomer mixture including a (meth)acrylate compound and an aromatic vinyl compound onto a butadiene-based rubbery polymer. The polymerization method may utilize a conventional manufacturing method, such as emulsion polymerization, suspension polymerization, solution polymerization, and bulk polymerization.

An average particle diameter of the butadiene-based rubbery polymer constituting the core of the butadiene-based rubber modified graft copolymer (B) may be 100 to 400 nm, for example, 100 to 300 nm. When the above range is satisfied, a thermoplastic resin composition including the same can exhibit excellent impact resistance.

Based on the solid content of the butadiene-based rubber modified graft copolymer (B), an amount of the core made of the butadiene-based rubbery polymer may be 40 to 60 wt%.

The (meth)acrylate compound forming the shell of the butadiene-based rubber modified graft copolymer (B) may be methyl (meth)acrylate, ethyl (meth)acrylate, propyl (meth)acrylate, n-butyl (meth)acrylate, isobutyl (meth)acrylate, tert-butyl (meth)acrylate, 2,2-dimethylpropyl (meth)acrylate, cyclopropyl (meth)acrylate, cyclobutyl (meth)acrylate, cyclopentyl (meth)acrylate, cyclohexyl (meth)acrylate, or a combination thereof, and may be, for example, methyl methacrylate. In addition, the aromatic vinyl compound forming the shell of the butadiene-based rubber modified graft copolymer (B) may be styrene, α-methylstyrene, p-methylstyrene, p-t-butylstyrene, 2,4-dimethylstyrene, chlorostyrene, vinyltoluene, vinyl naphthalene, or a combination thereof, and may be, for example, styrene.

For example, the butadiene-based rubber modified graft copolymer (B) may be a methyl methacrylate-butadiene-styrene copolymer (MBS).

The butadiene-based rubber modified graft copolymer (B) may be used in an amount of greater than or equal to 0.5 parts by weight, or greater than or equal to 0.7 parts by weight, and less than or equal to 5 parts by weight, or less than or equal to 3 parts by weight, based on 100 parts by weight of the base resin (A).

### [(C) Additives]

The thermoplastic resin composition of an embodiment may further include one or more additives necessary to balance the properties of the thermoplastic resin composition under conditions of maintaining excellent low-odor characteristics, chemical resistance, fluidity, heat resistance, and impact resistance, or depending on the final use of the thermoplastic resin composition.

Specifically, the additives (C) may include a flame retardant, a nucleating agent, a coupling agent, glass fiber, a plasticizer, a lubricant, an antibacterial agent, a release agent, an antioxidant, a light stabilizer, an antistatic agent, a pigment, a dye and these may be used alone or in combination of two or more.

The additives (C) may be appropriately included within a range that does not impair the properties of the thermoplastic resin composition, and specifically, may be included in an amount of less than or equal to 20 parts by weight with based on 100 parts by weight of the (A) base resin, but are not limited thereto.

### (Molded Article)

In another embodiment, a molded article using the thermoplastic resin composition is provided.

The thermoplastic resin composition can exhibit excellent fluidity, impact resistance, and heat resistance while exhibiting low odor characteristics and chemical resistance. Accordingly, the thermoplastic resin composition of an embodiment and the molded article using the same are particularly suitable for implementation as an interior material for automobiles.

The molded article of an embodiment may be manufactured by a known method. For example, the thermoplastic resin composition may be manufactured by extrusion and/or injection molding.

The molded article of an embodiment may exhibit excellent impact resistance, with a notched Izod impact strength of greater than or equal to 12 kgf·cm/cm as measured on a 1/8 inch-thick specimen according to ASTM D256.

In addition, the molded product of an embodiment may exhibit excellent heat resistance, such that the melt flow index (MI) measured at 250°C and 10 kg according to ISO 1133 may be greater than or equal to 9 g/10 min, and the heat distortion temperature (HDT) measured under a load of 4.6 kgf/cm² on a 6.4 mm-thick specimen according to ASTM D648 may be greater than or equal to 106°C.

### [Mode for Invention]

Hereinafter, the present invention is illustrated in more detail with reference to examples. These examples, however, are not in any sense to be interpreted as limiting the scope of the invention.

### Examples 1 to 7 and Comparative Examples 1 to 3

Each thermoplastic resin composition of Examples 1 to 7 and Comparative Examples 1 to 3 was prepared by mixing each component and common additive according to the compositions described in Tables 1 to 2.

**(Table 1)**

| | | unit | Comparative Example 1 | Comparative Example 2 |
|---|---|---|---|---|
| A | A-1 | wt% | 24 | 24 |
| | A-2 | wt% | 76 | - |
| | A-3 | wt% | - | 76 |
| | A-4 | wt% | - | - |
| | A-5 | wt% | - | - |
| B | B-1 | parts by weight | - | - |

**(Table 2)**

| | | unit | Exa mple 1 | Exa mple 2 | Exa mple 3 | Exa mple 4 | Exa mple 5 | Exa mple 6 | Exa mple 7 | Comparativ e Example 3 |
|---|---|---|---|---|---|---|---|---|---|---|
| A | A-1 | wt% | 24 | 24 | 24 | 20 | 20 | 22 | 25 | 24 |
| | A-2 | wt% | 30 | 30 | 30 | 30 | 30 | 30 | 30 | 30 |
| | A-3 | wt% | 21 | 21 | 21 | 25 | 25 | 23 | 20 | 21 |
| | A-4 | wt% | 10 | 10 | 10 | 10 | 10 | 10 | 10 | 10 |
| | A-5 | wt% | 15 | 15 | 15 | 15 | 15 | 15 | 15 | 15 |
| B | B-1 | parts by weight | 0.5 | 1 | 3 | 1 | 1 | 1 | 1 | 10 |

The components listed in Tables 1 and 2 are as follows.

### (A) Base Resin

### (A-1) Butadiene-based Rubber-modified Aromatic Vinyl Compound-Vinyl Cyanide Compound Graft Copolymer

An acrylonitrile-butadiene-styrene graft copolymer (g-ABS, manufacturer: Lotte Chemical Corp.), which was prepared by graft-polymerizing about 58 parts by weight of butadiene rubber having an average particle diameter of about 270 nm (core) and 42 parts by weight of a mixture of acrylonitrile and styrene in a weight ratio of 25:75

### (A-2) Polyethylene Terephthalate Resin

A recycled polyethylene terephthalate resin having intrinsic viscosity of about 0.7 dl/g, which was measured according to ASTM D4603 (r-PET, manufacturer: DY Polymer Co., Ltd.)

### (A-3) Aromatic Vinyl Compound-Vinyl Cyanide Compound Copolymer

A styrene-acrylonitrile copolymer having a weight average molecular weight of about 150,000 g/mol, which was prepared by copolymerizing a monomer mixture of about 25 wt% of acrylonitrile and about 75 wt% of styrene (SAN, manufacturer: Lotte Chemical Corp.)

### (A-4) Epoxy Group-containing (Meth)acrylate-Aromatic Vinyl Compound-Vinyl Cyanide Compound Copolymer

A glycidyl methacrylate-styrene-acrylonitrile copolymer having a weight average molecular weight of about 120,000 g/mol (GMA-SAN or SAG, manufacturer: Lotte Chemical Corp.), which was prepared by copolymerizing a monomer mixture of about 29 wt% of glycidyl methacrylate, about 21 wt% of styrene, and about 50 wt% of acrylonitrile

### (A-5) Phenyl Maleimide-based Copolymer

An N-phenyl maleimide-styrene-maleic anhydride copolymer having a weight average molecular weight of about 125,000 g/mol and a glass transition temperature of about 186°C (PMI-SM-MAH, manufacturer: Denka Company Ltd.)

### (B) Butadiene-based Rubber-modified Graft Copolymer

A core-shell type methylmethacrylate-butadiene-styrene graft copolymer (MBS, manufacturer: Lotte Chemical Corp.), which was prepared by graft-polymerizing about 45 parts by weight of butadiene rubber having an average particle diameter of about 310 nm (core) and 55 parts by weight of a mixture of methylmethacrylate and styrene in a weight ratio of 40:60

### Evaluation Examples

### (1) Manufacturing of Molded Article Specimens for Evaluation

Each thermoplastic resin composition in the form of pellets was prepared by adding each component according to compositions described in Tables 1 to 2 to a conventional mixer, adding 0.8 parts by weight of ethylene bis stearamide (EBS) and 2.5 parts by weight of a carbon black masterbatch based on 100 parts by weight of each (A) base resin having about 40 wt% of carbon black thereto, mixing them, and extruding the mixture with a twin-screw extruder having L/D=29 and Φ=45 mm at a (barrel) temperature of about 220°C. Each of the pellets was dried at about 80°C for about 2 hours and then, injection-molded by using a 6 oz injection molding machine set at a cylinder temperature of about 230°C and a mold temperature of about 60°C, preparing a specimen for evaluating properties.

### (2) Impact Resistance

A specimen with a thickness of 1/8 inch was measured with respect to notched Izod impact strength (unit: kgf·cm/cm) according to ASTM D256.

### (3) Fluidity

A melt flow index (unit: g/10 min) was measured according to ISO 1133 under conditions of 250°C and 10 kg.

### (3) Heat Resistance

A specimen with a thickness of 6.4 mm was measured with respect to a heat deflection temperature (unit: °C) under a load of 4.6 kgf/cm² according to ASTM D648.

### (4) Chemical Resistance

A specimen for evaluating tensile strength according to ASTM D638 was bend to have a strain of 0.5% and then, fixed and placed in a fixture, and onto the surface of the placed specimen, a vehicle air freshener (product name: Sandokkaebi Membrane, manufacturer: Sandokkaebi) was applied. Subsequently, whether or not the specimen surface was cracked was examined with naked eyes.

After allowing the specimen to stand for one day or more immediately after applying the air freshener, chemical resistance was evaluated by checking a degree of crack occurrence on the specimen surface according to the following criteria.
⊚: No cracks, excellent chemical resistance
O: Almost no cracking, good chemical resistance
X: Cracks occur, poor chemical resistance

### (5) Odor (smell)

Each pellet specimen was measured with respect to residual total volatile matter (RTVM, unit: ppm) of styrene and acrylonitrile, which were residual volatile components, at 250°C by using GC/MS (Gas Chromatography/Mass Spectrometry). **In** the evaluation, the higher residual total volatile matter, the more odor. The measurement was performed under the following conditions and in a pre-treatment method.

### - Measurement conditions

**(Table 3)**

| Parameter | Condition |
|---|---|
| Column | INNOWAX (length 30M, ID 0.53 nm, film thickness 0.88 µm) |
| Temp. Prog. | 40°C (4min) → 20°C/min → 250°C (4min) |
| Flow rate | 10 mL/min (Head pressure 6.57 Pa) |
| Injector | S/SL injector |
| Split ratio | 5:01 |
| Detector | FID |
| Injection Vol. | 1µℓ |
| Injector Temp. | 150°C |

### - Pre-treatment method

1) 0.2 to 0.3 g of each of the pellet samples was added to be measured into a 20 mL vial.
2) 9 mL of NMP was added and dissolved therein using a shaker for more than 10 hours.
3) 1 mL of an internal standard solution was added thereto and then, stirred and filtered through a 0.45 µm filter.

**(Table 4)**

| | Comparative Example 1 | Comparative Example 2 |
|---|---|---|
| Izod impact strength (kgf·cm/cm) | 6 | 25 |
| Melt flow index (g/10 min) | 4 | 50 |
| Heat distortion temperature (°C) | 85 | 100 |
| Degree of crack occurrence | ⊚ | X |
| RTVM (ppm) | 300 | 900 |

**(Table 5)**

| | Exa mple 1 | Exa mple 2 | Exa mple 3 | Exa mple 4 | Exa mple 5 | Exa mple 6 | Exa mple 7 | Comparativ e Example 3 |
|---|---|---|---|---|---|---|---|---|
| Izod impact strength (kgf·cm/cm) | 13 | 15 | 15 | 16 | 12 | 14 | 16 | 17 |
| Melt flow index (g/10 min) | 10 | 11 | 10 | 9 | 13 | 11 | 9 | 8 |
| Heat deflection temperature (°C) | 110 | 111 | 110 | 106 | 112 | 109 | 107 | 105 |
| Degree of crack occurrence | O | O | O | O | O | O | O | O |
| RTVM (ppm) | 550 | 550 | 550 | 550 | 550 | 550 | 550 | 550 |

Referring to Tables 4 to 5, the molded articles according to Examples 1 to 7 were confirmed to exhibit excellent properties. The molded article of Comparative Example 1 exhibited very low fluidity, impact resistance, and heat resistance, and the molded article of Comparative Example 2 also exhibited inferior chemical resistance, heat resistance, and low odor characteristics. On the contrary, the molded articles of Examples 1 to 7 were confirmed to exhibit excellent fluidity, heat resistance, and impact resistance as well as excellent low-odor characteristics and chemical resistance.

Accordingly, the thermoplastic resin composition according to an embodiment, which was represented by Examples 1 to 7, was particularly suitable for implementation as an interior material for a vehicle.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A thermoplastic resin composition, comprising
based on (A) 100 parts by weight of a base resin comprising (A-1) 20 to 25 wt% of a butadiene-based rubber-modified aromatic vinyl compound-vinyl cyanide compound graft copolymer; (A-2) 20 to 40 wt% of a polyethylene terephthalate resin; (A-3) 20 to 25 wt% of an aromatic vinyl compound-vinyl cyanide compound copolymer; (A-4) 5 to 15 wt% of an epoxy group-containing (meth)acrylate compound-aromatic vinyl compound-vinyl cyanide compound copolymer; and (A-5) 10 to 20 wt% of a phenyl maleimide-based copolymer,
(B) 0.5 to 5 parts by weight of a butadiene-based rubber modified graft copolymer.

2. The thermoplastic resin composition of claim 1, wherein
the butadiene-based rubber modified aromatic vinyl compound-vinyl cyanide compound graft copolymer (A-1) is a core-shell structured particle comprising a core made of a butadiene-based rubbery polymer; and a shell formed by graft polymerization of an aromatic vinyl compound-vinyl cyanide compound compound copolymer onto the core.

3. The thermoplastic resin composition of claim 1 or claim 2, wherein
the butadiene-based rubber modified aromatic vinyl compound-vinyl cyanide compound graft copolymer (A-1) is an acrylonitrile-butadiene-styrene graft copolymer.

4. The thermoplastic resin composition of any one of claim 1 to claim 3, wherein
the polyethylene terephthalate resin (A-2) is a recycled polyethylene terephthalate resin.

5. The thermoplastic resin composition of any one of claim 1 to claim 4, wherein
the aromatic vinyl compound-vinyl cyanide compound copolymer (A-3) is a styrene-acrylonitrile copolymer.

6. The thermoplastic resin composition of any one of claim 1 to claim 5, wherein
the epoxy group-containing (meth)acrylate compound-aromatic vinyl compound-vinyl cyanide compound copolymer (A-4) is a glycidyl methacrylate-styrene-acrylonitrile copolymer.

7. The thermoplastic resin composition of any one of claim 1 to claim 6, wherein
the phenyl maleimide-based copolymer (A-5) is an N-phenyl maleimide-styrene-maleic anhydride copolymer.

8. The thermoplastic resin composition of any one of claim 1 to claim 7, wherein
the butadiene-based rubber modified graft copolymer (B) comprises a core made of a butadiene-based rubbery polymer; and a shell formed by graft polymerization of an aromatic vinyl compound-vinyl cyanide compound copolymer onto the core.

9. The thermoplastic resin composition of any one of claim 1 to claim 8, wherein
the butadiene-based rubber modified graft copolymer (B) is a methylmethacrylate-butadiene-styrene copolymer.

10. A molded article using the thermoplastic resin composition of any one of claim 1 to claim 9.

11. The molded article of claim 10, wherein
the molded article has a notched Izod impact strength of greater than or equal to 12 kgf·cm/cm as measured on a 1/8 inch-thick specimen according to ASTM D256.

12. The molded article of claim 10 or claim 11, wherein
the molded article has a melt flow index of greater than or equal to 9 g/10 min as measured under the conditions of 250°C and 10 kg according to ISO 1133.

13. The molded article of any one of claim 10 to claim 12, wherein
the molded article has a heat deflection temperature of greater than or equal to 106°C when measured under a load of 4.6 kgf/cm² on a 6.4 mm thick specimen according to ASTM D648.

## Amended claims

### Amended claims in accordance with Rule 137(2) EPC.

1. A thermoplastic resin composition, comprising
based on (A) 100 parts by weight of a base resin comprising (A-1) 20 to 25 wt% of a butadiene-based rubber-modified aromatic vinyl compound-vinyl cyanide compound graft copolymer; (A-2) 20 to 40 wt% of a polyethylene terephthalate resin; (A-3) 20 to 25 wt% of an aromatic vinyl compound-vinyl cyanide compound copolymer; (A-4) 5 to 15 wt% of an epoxy group-containing (meth)acrylate compound-aromatic vinyl compound-vinyl cyanide compound copolymer; and (A-5) 10 to 20 wt% of a phenyl maleimide-based copolymer,
(B) 0.5 to 5 parts by weight of a butadiene-based rubber modified graft copolymer.

2. The thermoplastic resin composition of claim 1, wherein
the butadiene-based rubber modified aromatic vinyl compound-vinyl cyanide compound graft copolymer (A-1) is a core-shell structured particle comprising a core made of a butadiene-based rubbery polymer; and a shell formed by graft polymerization of an aromatic vinyl compound-vinyl cyanide compound copolymer onto the core.

3. The thermoplastic resin composition of claim 1 or claim 2, wherein
the butadiene-based rubber modified aromatic vinyl compound-vinyl cyanide compound graft copolymer (A-1) is an acrylonitrile-butadiene-styrene graft copolymer.

4. The thermoplastic resin composition of any one of claim 1 to claim 3, wherein
the polyethylene terephthalate resin (A-2) is a recycled polyethylene terephthalate resin.

5. The thermoplastic resin composition of any one of claim 1 to claim 4, wherein
the aromatic vinyl compound-vinyl cyanide compound copolymer (A-3) is a styrene-acrylonitrile copolymer.

6. The thermoplastic resin composition of any one of claim 1 to claim 5, wherein
the epoxy group-containing (meth)acrylate compound-aromatic vinyl compound-vinyl cyanide compound copolymer (A-4) is a glycidyl methacrylate-styrene-acrylonitrile copolymer.

7. The thermoplastic resin composition of any one of claim 1 to claim 6, wherein
the phenyl maleimide-based copolymer (A-5) is an N-phenyl maleimide-styrene-maleic anhydride copolymer.

8. The thermoplastic resin composition of any one of claim 1 to claim 7, wherein
the butadiene-based rubber modified graft copolymer (B) comprises a core made of a butadiene-based rubbery polymer; and a shell formed by graft polymerization of an aromatic vinyl compound-vinyl cyanide compound copolymer onto the core.

9. The thermoplastic resin composition of any one of claim 1 to claim 8, wherein
the butadiene-based rubber modified graft copolymer (B) is a methylmethacrylate-butadiene-styrene copolymer.

10. A molded article using the thermoplastic resin composition of any one of claim 1 to claim 9.

11. The molded article of claim 10, wherein
the molded article has a notched Izod impact strength of greater than or equal to 12 kgf·cm/cm as measured on a 1/8 inch-thick specimen according to ASTM D256.

12. The molded article of claim 10 or claim 11, wherein
the molded article has a melt flow index of greater than or equal to 9 g/10 min as measured under the conditions of 250°C and 10 kg according to ISO 1133.

13. The molded article of any one of claim 10 to claim 12, wherein
the molded article has a heat deflection temperature of greater than or equal to 106°C when measured under a load of 4.6 kgf/cm² on a 6.4 mm thick specimen according to ASTM D648.

Statement under Art. 19.1 PCT
There are a total of 13 claims as-filed.

Claim 2 is amended,

Claim 1, and claims 3 to 13 are maintained.

Hereby, claims 1 to 13 are pending in the scope of claims after the amendment.

REMARKS

The amendment of claim 2 is to correct an error where a word was repeated, such as in "compound compound copolymer", to clarify that it is "compound copolymer", which is described in paragraph [37] on page 4 of the specification.

Therefore, the above amendment is included within the scope of the specification as originally filed.
